(19) Europäisches Patentamt
European Patent Office
Office européen des brevets

(11) EP 2 368 955 A1

(12) # EUROPÄISCHE PATENTANMELDUNG

(43) Veröffentlichungstag:
**28.09.2011 Patentblatt 2011/39**

(51) Int Cl.:
***C09J 163/00*** *(2006.01)* ***C09J 175/00*** *(2006.01)*

(21) Anmeldenummer: **10158076.9**

(22) Anmeldetag: **26.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(71) Anmelder: **Sika Technology AG**
**6340 Baar (CH)**

(72) Erfinder:
- **GÖSSI, Matthias**
**8610, Uster (CH)**
- **FINTER, Jürgen**
**8037, Zürich (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(54) **Formgedächtnis-Material auf Basis eines Strukturklebstoffs**

(57) Die vorliegende Erfindung betrifft eine Zusammensetzung umfassend
a) mindestens einen härtbaren Strukturklebstoff, sowie
b) mindestens ein thermoplastisches Elastomer, wobei das thermoplastische Elastomer als durchdringendes Polymernetzwerk im Strukturklebstoff vorliegt.

Eine derartige Zusammensetzung stellt ein sogenanntes Formgedächtnis-Material dar und eignet sich zur Verstärkung von Hohlräumen in strukturellen Bauteilen, wie beispielsweise in Automobilkarosserien.

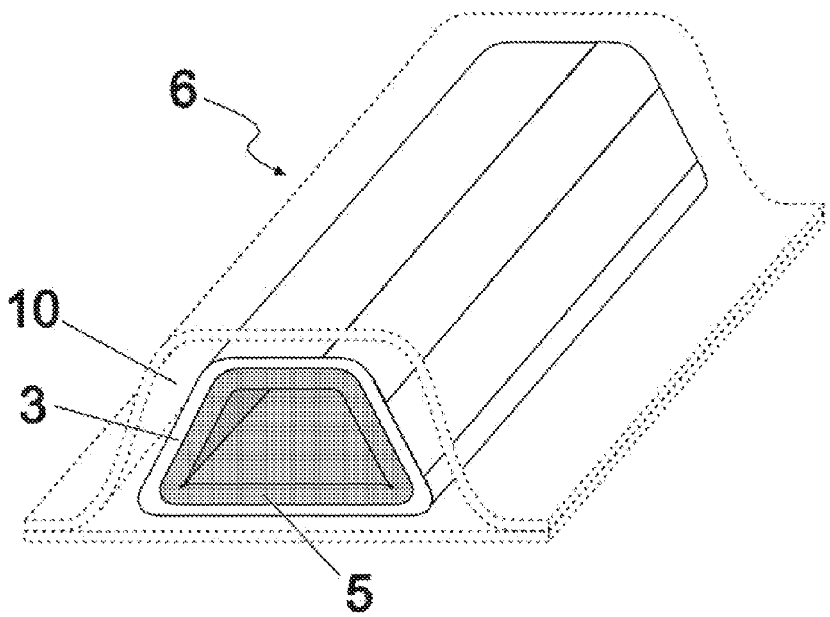


Figur 5

EP 2 368 955 A1

## Beschreibung

### Technisches Gebiet

Die Erfindung liegt auf dem Gebiet der Zusammensetzungen umfassend härtbare Strukturklebstoffe, welche als so genannte Formgedächtnis-Materialien ausgebildet sind. Weiterhin betrifft die Erfindung ein Verstärkungselement zur Verstärkung in Hohlräumen von strukturellen Bauteilen, wie sie beispielsweise bei Automobilkarosserien und dergleichen eingesetzt werden.

### Stand der Technik

Oftmals werden bei Konstruktionen jeglicher Art hohlräumige strukturelle Bauteile eingesetzt. Diese Bauweise erlaubt es, das Gewicht der Konstruktion und den Materialaufwand niedrig zu halten, jedoch gehen bei dieser Bauweise häufig auch Stabilität und Festigkeit verloren. Die Hohlräume bieten zudem, aufgrund der grösseren Oberfläche des hohlen Bauteils, eine grössere Angriffsfläche für Korrosion, falls Feuchtigkeit oder Schmutz in sie eindringt. Ebenfalls können Geräusche, die beispielsweise durch Wind oder Vibrationen verursacht werden, in oder entlang der Hohlräume übertragen werden.

Aufgrund der Form und/oder des engen Ausmasses solcher Hohlräume ist es vielfach schwierig diese effizient zu verstärken, abzudichten oder die Geräuschübertragung einzudämmen.

Insbesondere um die mechanischen Eigenschaften hohlräumiger struktureller Bauteile zu verbessern, ist es weitgehend üblich, lokale Verstärkungselemente in die Bauteile einzusetzen oder einzubauen. Derartige Verstärkungselemente bestehen typischerweise aus Metallen oder Kunststoffen oder aus Kombinationen dieser Werkstoffe. An schwer zugänglichen Stellen, welche beispielsweise erst nach der Montage des Bauteils verstärkt oder abgedichtet werden sollen, werden häufig auch Strukturschäume eingesetzt. Dies ist etwa bei der Herstellung von Fahrzeugstrukturen bzw. Karosserien der Fall. Der Vorteil der Strukturschäume ist, dass sie im nicht expandierten Zustand in einem Hohlraum montiert werden können und später, vor allem durch Temperaturerhöhung geschäumt werden können. So kann beispielsweise die Innenwand des Hohlraums auch nach der Montage des Verstärkungselements mittels kathodischer Tauchlackierung (KTL) vollständig beschichtet und erst danach durch Schäumung des Strukturklebstoffs verstärkt werden. Die Schäumung erfolgt dabei typischerweise während der Härtung der KTL-Schicht im Ofen.

Der Nachteil derartiger Verstärkungselemente ist, dass die mechanischen Eigenschaften des Strukturklebstoffs mit dem Schäumungsvorgang beeinträchtigt werden.

### Darstellung der Erfindung

Die Aufgabe der vorliegenden Erfindung ist es daher, ein Verstärkungselement zur Verfügung zu stellen, welcher die Nachteile des Standes der Technik überwindet und es erlaubt, einen Spalt zwischen Hohlraum und Verstärkungselement zu schliessen, ohne dass dabei die mechanischen Eigenschaften des Strukturklebstoffs beeinträchtigt werden.

Überraschenderweise wurde gefunden, dass mit Zusammensetzungen gemäss Anspruch 1 diese Aufgabe gelöst werden kann.

Es wurde gefunden, dass sich mit erfindungsgemässen Zusammensetzungen Formgedächtnis-Materialien realisieren lassen, welche insbesondere durch Temperatureinfluss ihre Form ändern und somit in eine gewünschte Richtung expandieren, ohne dass dabei eine Volumenzunahme, beispielsweise durch einen Schäumungsvorgang, einhergeht.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Anhand der Zeichnungen werden Ausführungsbeispiele der Erfindung näher erläutert. Gleiche Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:

Figur 1 eine schematische Darstellung der Herstellung eines Formkörpers bzw. einer Zusammensetzung in ihrer temporären Form;

Figur 2 eine schematische Darstellung Verstärkungselements;

Figur 3 eine schematische Darstellung der Formänderung und Aushärtung der Zusammensetzung;

Figur 4 eine schematische Darstellung der Verstärkung eines Hohlraums eines strukturellen Bauteils;

Figur 5 eine schematische Darstellung eines Verstärkungselements in einem Hohlraum eines strukturellen Bauteils;

Figur 6 eine schematische Darstellung eines verstärkten strukturellen Bauteils.

In den Figuren sind nur die für das unmittelbare Verständnis der Erfindung wesentlichen Elemente gezeigt.

**Wege zur Ausführung der Erfindung**

Die vorliegende Erfindung betrifft in einem ersten Aspekt eine Zusammensetzung umfassend

i) mindestens einen härtbaren Strukturklebstoff, sowie

ii) mindestens ein thermoplastisches Elastomer;
wobei das thermoplastische Elastomer als durchdringendes Polymernetzwerk im Strukturklebstoff vorliegt.

Beim härtbaren Strukturklebstoff handelt es sich vorzugsweise um eine Epoxidharzzusammensetzung oder um eine Polyurethanzusammensetzung.

Handelt es sich beim härtbaren Strukturklebstoff um eine Epoxidharzzusammensetzung, sollte diese eine Glasübergangstemperatur $T_g$ aufweisen, welche über Raumtemperatur liegt.

Handelt es sich beim härtbaren Strukturklebstoff um eine Polyurethanzusammensetzung, sollte diese einen Schmelzpunkt aufweist, welcher über Raumtemperatur liegt.

Im vorliegenden Dokument beziehen sich also Angaben zur Glasübergangstemperatur $T_g$, auf jene Ausführungsform der erfindungsgemässen Zusammensetzung, bei welcher der härtbare Strukturklebstoff eine Epoxidharzzusammensetzung ist, sofern nichts anderes angegeben ist. Entsprechend beziehen sich Angaben zum Schmelzpunkt auf jene Ausführungsform, bei welcher der härtbare Strukturklebstoff eine Polyurethanzusammensetzung ist.

Der Term "durchdringendes Polymernetzwerk" wird im vorliegenden Dokument in Anlehnung an die Definition eines "Semi-interpenetrierenden Polymernetzwerks" (semi-interpenetrating polymer network (SIPN)) gemäss IUPAC Compendium of Chemical Terminology, 2nd Edition (1997) verwendet. Demnach umfasst das SIPN mindestens ein Netzwerk sowie mindestens ein lineares oder verzweigtes Polymer, wobei dieses Polymer das Netzwerk zumindest teilweise durchdringt. In der erfindungsgemässen Zusammensetzung bildet das Elastomer das Netzwerk, das Polymer ist Bestandteil des härtbaren Strukturklebstoffs.

Die erfindungsgemässe Zusammensetzung, welche ein "Formgedächtnis-Material" ("shape memory material") darstellt, kann bei ihrer Herstellung oder Verarbeitung in eine bestimmte Form ("ursprüngliche Form") gebracht werden und weist nach dieser Formgebung eine feste Konsistenz auf, das heisst, dass der Strukturklebstoff bei einer Temperatur unterhalb seiner Glasübergangstemperatur $T_g$ bzw. unterhalb seines Schmelzpunktes vorliegt. In dieser Form liegt das Elastomer, welches als durchdringendes Polymernetzwerk im Strukturklebstoff vorliegt, im Wesentlichen entspannt vor. Bei Bedarf wird die Zusammensetzung dann auf eine Temperatur oberhalb der Glasübergangstemperatur $T_g$ bzw. des Schmelzpunkts des Strukturklebstoffs erwärmt und in eine beliebige Form ("temporäre Form") gebracht. In dieser temporären Form liegt das Elastomer in einer gespannten Form vor. Die Zusammensetzung wird in dieser temporären Form gehalten und die Temperatur der Zusammensetzung wird wieder unter die Glasübergangstemperatur $T_g$ bzw. unter den Schmelzpunkt des Strukturklebstoffs gesenkt, wodurch sich die Zusammensetzung in der temporären Form verfestigt. In dieser temporären Form ist die Zusammensetzung lagerstabil und kann einer Verarbeitung, beispielsweise Stanzen oder Schneiden, unterzogen werden. Wird die Zusammensetzung zu einem späteren Zeitpunkt wieder auf eine Temperatur erwärmt, welche oberhalb der Glasübergangstemperatur $T_g$ bzw. des Schmelzpunkts des Strukturklebstoffs liegt, bringt sich das Elastomer wieder in seine entspannte Form und verformt somit die gesamte Zusammensetzung in ihre ursprüngliche Form.

Insbesondere handelt es sich bei der erfindungsgemässen Zusammensetzung um ein Formgedächtnis-Material, welches bei Raumtemperatur (23°C) fest ist, was eine optimale Handhabung des Materials in seiner ursprünglichen und in seiner temporären Form erlaubt.

Damit die erfindungsgemässe Zusammensetzung bei Raumtemperatur fest ist, sollte der härtbare Strukturklebstoff eine Glasübergangstemperatur $T_g$, im Fall einer Epoxidharzzusammensetzung, bzw. einen Schmelzpunkt, im Fall einer Polyurethanzusammensetzung, aufweisen, welcher über der Raumtemperatur liegt. Ansonsten könnte die erfindungsgemässe Zusammensetzung, nachdem sie in ihre temporäre Form gebracht wurde, das in dieser temporären Form angespannte Elastomer, bei Raumtemperatur nicht in dieser Form halten.

Vorzugsweise handelt es sich beim härtbaren Strukturklebstoff um

- eine Epoxidharzzusammensetzung mit einer Glasübergangstemperatur $T_g$ im Bereich von 23°C bis 95°C, insbesondere von 30°C bis 80°C, bevorzugt von 35°C bis 75°C; oder um
- eine Polyurethanzusammensetzung mit einem Schmelzpunkt im Bereich von 23°C bis 95°C, insbesondere von 30°C bis 80°C, bevorzugt von 35°C bis 75°C.

Weiterhin bevorzugt ist die Oberfläche der erfindungsgemässen Zusammensetzung bei Raumtemperatur nicht klebrig, was ihre Handhabung erleichtert.

Beim härtbaren Strukturklebstoff handelt es sich insbesondere um einen hitzehärtenden Strukturklebstoff, welcher vorzugsweise eine Aushärtungstemperatur im Bereich von 120°C bis 220°C, insbesondere 160°C bis 200°C, aufweist.

Handelt es sich beim härtbaren Strukturklebstoff um einen hitzehärtenden Strukturklebstoff, muss bei der Verarbeitung der Zusammensetzung, bei welcher sie in ihre temporäre Form gebracht wird, darauf geachtet werden, dass die Zusammensetzung nicht soweit erwärmt wird, dass der Aushärtungsvorgang einsetzt.

Meist bevorzugt ist der härtbare Strukturklebstoff eine Epoxidharzzusammensetzung umfassend mindestens ein Epoxidharz **A** und mindestens einen Härter **B** für Epoxidharze, welcher durch erhöhte Temperatur aktiviert wird. Insbesondere handelt es sich dabei um eine einkomponentige Epoxidharzzusammensetzung.

Das Epoxidharz **A,** weist durchschnittlich mehr als eine Epoxidgruppe pro Molekül auf und ist insbesondere ein Epoxid-Festharz oder eine Mischung eines Epoxid-Festharzes mit einem Epoxid-Flüssigharz. Der Begriff "Epoxid-Festharz" ist dem Epoxid-Fachmann bestens bekannt und wird im Gegensatz zu "Epoxid-Flüssigharz" verwendet. Die Glasübergangstemperatur $T_g$ von Festharzen liegt über Raumtemperatur.
Bevorzugte Epoxid-Festharze weisen die Formel (I) auf.

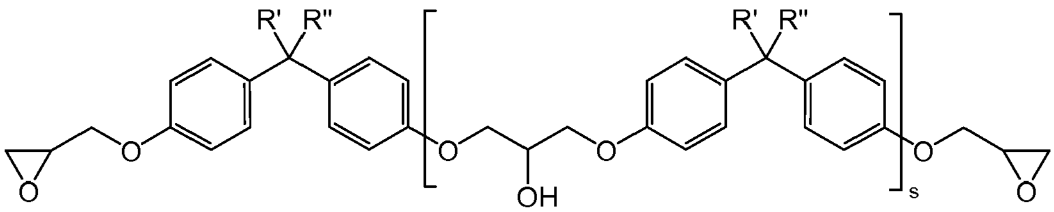

(I)

Hierbei stehen die Substituenten R' und R" unabhängig voneinander entweder für H oder $CH_3$. Weiterhin steht der Index s für einen Wert von ≥ 1, insbesondere von ≥ 1.5, bevorzugt von 2 bis 12.

Derartige Epoxid-Festharze sind beispielsweise kommerziell erhältlich von Dow Chemical Company, USA, von Huntsman International LLC, USA, oder von Hexion Specialty Chemicals Inc, USA.

Bevorzugte Epoxid-Flüssigharze, welche insbesondere zusammen mit einem Epoxid-Festharz verwendet werden können, weisen die Formel (II) auf.

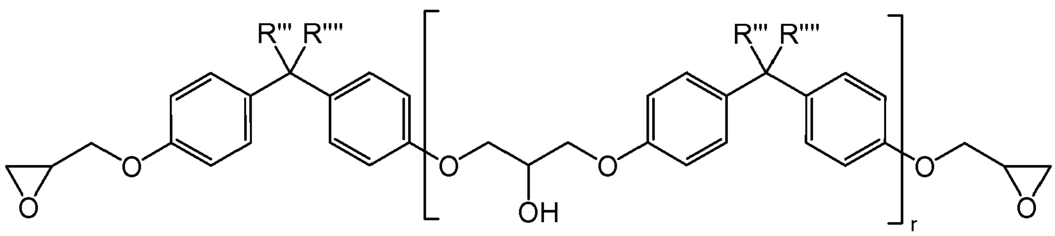

(II)

Hierbei stehen die Substituenten R''' und R'''' unabhängig voneinander entweder für H oder $CH_3$- Weiterhin steht der Index r für einen Wert von 0 bis 1. Bevorzugt steht r für einen Wert von ≤ 0.2.

Es handelt sich somit vorzugsweise um Diglycidylether von Bisphenol-A (DGEBA), von Bisphenol-F sowie von Bisphenol-A/F. Die Bezeichnung "A/F" verweist hierbei auf eine Mischung von Aceton mit Formaldehyd, welche als Edukt bei dessen Herstellung verwendet wird. Solche Flüssigharze sind beispielsweise unter den Handelsnamen Araldite® GY 250, Araldite® PY 304, Araldite® GY 282 von Huntsman International LLC, USA, oder D.E.R.® 331 oder D.E.R.®

330 von Dow Chemical Company, USA, oder unter dem Handelsnamen Epikote® 828 oder Epikote® 862 von Hexion Specialty Chemicals Inc, USA, kommerziell erhältlich.

Weitere geeignete Epoxidharze sind sogenannte Novolake. Diese weisen insbesondere die folgende Formel (III) auf.

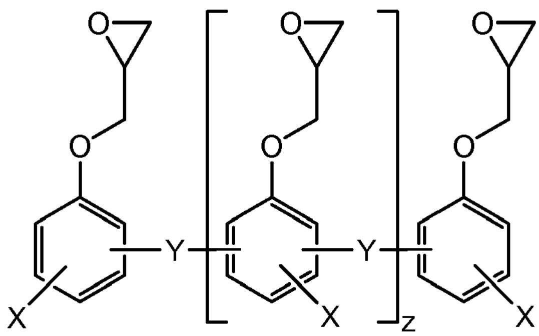

(III)

Dabei steht der Rest X für ein Wasserstoffatom oder für eine Methylgruppe. Der Rest Y steht für $-CH_2-$ oder für einen Rest der Formel (IV).

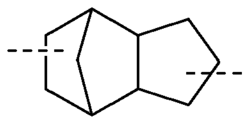

(IV)

Weiterhin steht der Index z für einen Wert von 0 bis 7, insbesondere für einen Wert ≥ 3.

Insbesondere handelt es sich hierbei um Phenol- oder Kresol-Novolake (Y steht für $-CH_2-$).

Derartige Epoxidharze sind unter dem Handelsnamen EPN oder ECN sowie Tactix® 556 von Huntsman International, LLC, USA, oder unter der Produktreihe D.E.N.™ von Dow Chemical Company, USA, kommerziell erhältlich.

Bevorzugt stellt das Epoxidharz **A** ein Epoxid-Festharz der Formel (I) dar. In einer ebenfalls bevorzugten Ausführungsform enthält die hitzehärtende Epoxidharzzusammensetzung sowohl mindestens ein Epoxid-Festharz der Formel (I) als auch mindestens ein Epoxid-Flüssigharz der Formel (II).

Der Anteil von Epoxidharz **A** beträgt vorzugsweise 2 bis 90 Gew.-%, insbesondere 5 bis 70 Gew.-%, bevorzugt 10 bis 60 Gew.-%, bezogen auf das Gesamtgewicht des härtbaren Strukturklebstoffs.

Der Härter **B** für Epoxidharze wird durch erhöhte Temperatur aktiviert. Bevorzugt handelt es sich beim Härter **B** um einen Härter, ausgewählt aus der Gruppe bestehend aus Dicyandiamid, Guanamine, Guanidine, Aminoguanidine methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), sowie Imidazole und Amin-Komplexe.

Besonders bevorzugt als Härter **B** ist Dicyandiamid, insbesondere in Kombination mit einem substituierten Harnstoff. Der Vorteil der Kombination von Dicyandiamid mit einem substituierten Harnstoff liegt in der dadurch erzielten beschleunigten Aushärtung der Zusammensetzung.

Der Anteil des Härters **B** beträgt vorzugsweise 0.05 bis 8 Gew.-%, insbesondere 0.1 bis 6 Gew.-%, bevorzugt 0.2 bis 5 Gew.-%, bezogen auf das Gesamtgewicht des härtbaren Strukturklebstoffs.

Der Begriff "Härter" schliesst im vorliegenden Dokument auch Katalysatoren und katalytisch wirkende Verbindungen mit ein. Dem Fachmann ist in diesem Fall klar, dass beim Einsatz eines Katalysators oder einer katalytisch wirkenden Verbindung als Härter **B,** der Anteil der Härters **B** am gesamten härtbaren Strukturklebstoff im unteren Bereich des angegebenen Wertebereichs liegt.

Zusätzlich kann die Epoxidharzzusammensetzung mindestens ein Schlagzähigkeitsmodifikator umfassen.

Unter einem "Schlagzähigkeitsmodifikator" wird in diesem Dokument ein Zusatz eines organischen Polymers zu einer Epoxidharzmatrix verstanden, der bereits in geringen Mengen, d.h. von typischerweise zwischen 0.1 und 20 Gew.-%, eine deutliche Zunahme der Zähigkeit bewirkt und somit in der Lage ist, höhere Schlag- oder Stossbeanspruchung aufzunehmen, bevor die Matrix einreisst oder bricht.

Als Schlagzähigkeitsmodifikatoren eignen sich insbesondere reaktive Flüssigkautschuke auf Basis von Nitrilkautschuk oder Derivate von Polyetherpolyol-Polyurethanen, Core-Shell Polymere und ähnliche dem Fachmann bekannte Systeme.

Geeignete Schlagzähigkeitsmodifikatoren sind als Schlagzähigkeitsmodifikatoren **D** beschrieben in der europäischen Patentanmeldung mit der Anmeldenummer EP08168009.2, deren Inhalt hiermit durch Bezugnahme eingeschlossen wird.

Insbesondere handelt es sich beim Schlagzähigkeitsmodifikator um ein nicht-thermoplastisches Elastomer.

Ebenfalls geeignet ist der härtbare Strukturklebstoff eine einkomponentige, hitzehärtende Polyurethanzusammensetzung, welche bei Raumtemperatur eine feste Konsistenz aufweist.

Einkomponentige, hitzehärtende Polyurethanzusammensetzungen, welche bei Raumtemperatur eine feste Konsistenz aufweisen, sind dem Fachmann bekannt und können unterschiedliche Härtungsmechanismen aufweisen.

In einer ersten Ausführungsform werden Polyurethanzusammensetzungen eingesetzt, welche neben einem festen Isocyanatgruppen terminierten Polyurethanpolymer, weiterhin mindestens ein Aldimin, insbesondere ein Polyaldimin, als Härter aufweisen. Beim Erhöhen der Temperatur und der dadurch verursachten Erweichung des Polyurethanpolymers, kann Wasser, insbesondere in Form von Luftfeuchtigkeit, in die Polyurethanzusammensetzung eindringen, wodurch es zur Hydrolysierung der Aldimine und dadurch zur Freisetzung von Aminen kommt, welche dann mit den Isocyanatgruppen reagieren und zur Aushärtung der Zusammensetzung führen.

Beispielsweise sind derartige geeignete hitzehärtende Polyurethanzusammensetzungen beschreiben in WO 2008/059056 A1, deren gesamte Offenbarung hiermit durch Bezugnahme eingeschlossen wird.

In einer zweiten Ausführungsform können Polyurethanzusammensetzungen eingesetzt werden, welche neben einem Isocyanatgruppen terminierten Polyurethanpolymer weiterhin mindestens einen Härter aufweisen, welcher gegenüber Isocyanaten reaktive Gruppen enthält und in blockierter Form vorliegt. Die Blockierung kann dabei chemischer oder physikalischer Natur sein. Beispiele für geeignete chemisch blockierte Härter sind über eine Komplexbindung an Metalle gebundene Polyamine, im Besonderen Komplexverbindungen von Methylendianilin (MDA) und Natriumchlorid. Solche Komplexverbindungen werden üblicherweise mit der Bruttoformel $(MDA)_3$.NaCl beschrieben. Ein geeigneter Typ ist als Dispersion in Diethylhexylphthalat unter dem Handelsnamen Caytur® 21 von Chemtura Corp., USA, erhältlich. Der Komplex zersetzt sich beim Erwärmen auf 80 bis 160°C mit bei höherer Temperatur zunehmender Geschwindigkeit, wodurch Methylendianilin als aktiver Härter freigesetzt wird.

Beispiele für physikalisch blockierte Härter sind mikroverkapselte Härter. Zur Verwendung als Härter in mikroverkapselter Form insbesondere geeignet sind zwei- oder mehrwertige Alkohole, kurzkettige Polyesterpolyole, aliphatische, cycloaliphatische und aromatische Aminoalkohole, Hydrazide von Dicarbonsäuren, aliphatische Polyamine, cycloaliphatische Polyamine, Ethergruppen-haltige aliphatische Polyamine, Polyoxyalkylen-Polyamine, beispielsweise erhältlich unter dem Namen Jeffamine® (von Huntsman International LLC, USA), aromatische Polyamine. Bevorzugt sind aliphatische, cycloaliphatische und aromatische Polyamine, insbesondere Ethanolamin, Propanolamin, Butanolamin, N-Methylethanolamin, Diethanolamin, Triethanolamin.

Eine ausführliche Aufzählung von geeigneten Härtern zur Verwendung in mikroverkapselter Form ist beispielsweise zu finden auf Seite 14, ab Zeile 25 in WO 2009/016106 A1, dessen gesamte Offenbarung hiermit durch Bezugnahme eingeschlossen wird.

Die Mikroverkapselung dieser Härter kann nach einem der gängigen Verfahren durchgeführt werden, beispielsweise mittels Sprühtrocknung, Grenzflächenpolymerisation, Koazervation, Tauch- oder Zentrifugenverfahren, Wirbelbettverfahren, Vakuum-Verkapselung, elektrostatische Mikroverkapselung. Die so erhaltenen Mikrokapseln haben eine Partikelgrösse von 0.1 bis 100 $\mu$m, bevorzugt 0.3 bis 50 $\mu$m. Die Grösse der Mikrokapseln ist so bemessen, dass sie sich beim Erhitzen einerseits effektiv öffnen, und andererseits nach der Aushärtung eine optimale Homogenität und damit Kohäsionsfestigkeit des Strukturklebstoffs erhalten wird. Sie dürfen weiterhin keinen schädlichen Einfluss auf die Adhäsionseigenschaften des Strukturklebstoffs ausüben. Als Material für die Kapselhülle kommen Polymere in Betracht, die im zu verkapselnden Härter unlöslich sind und einen Schmelzpunkt von 50 bis 150°C aufweisen. Beispiele für geeignete Polymere sind KohlenwasserstoffWachse, Polyethylenwachse, Wachsester, Polyester, Polyamide, Polyacrylate, Polymethacrylate oder Mischungen mehrerer solcher Polymeren.

In einer dritten Ausführungsform können Isocyanatgruppen terminierte Polyurethanpolymere eingesetzt werden, deren Isocyanatgruppen mit thermisch labilen Blockierungsgruppen, wie beispielsweise mit Caprolactam, umgesetzt wurden oder solche, deren Isocyanatgruppen zu thermisch labilen Uretdionen dimerisiert wurden.

In einer vierten Ausführungsform können Polyurethanzusammensetzungen eingesetzt werden, welche neben einem Hydroxylgruppen terminierten Polyurethanpolymer und/oder mindestens einem polymeren Polyol, wie es vorhergehend beschrieben wurde, weiterhin mindestens einen verkapseltes oder oberflächendeaktiviertes Polyisocyanat als Härter umfassen. Verkapselte oder oberflächendeaktivierte Polyisocyanate sind dem Fachmann bekannt und beispielsweise beschreiben in EP 0 204 970 oder in EP 0 922 720, deren Offenbarung hiermit eingeschlossen ist. Als Polyisocyanate eignen sich dabei die vorhergehend beschriebenen.

Handelt es sich beim härtbaren Strukturklebstoff um eine Polyurethanzusammensetzung sind die Bestandteile zu deren Herstellung, insbesondere Polyisocyanat und Polyol, bezüglich ihrem Molekulargewicht und ihrer Funktionalität, vorzugsweise so zu wählen, dass das Polyurethan einen Schmelzpunkt aufweist, welcher über Raumtemperatur liegt,

insbesondere im Bereich von 23 bis 95°C.

Der härtbare Strukturklebstoff kann weitere Bestandteile enthalten, wie sie üblicherweise in härtbaren Strukturklebstoffen eingesetzt werden.

Insbesondere enthält der härtbare Strukturklebstoff zusätzlich mindestens einen Füllstoff. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint. Ein weiteres Beispiel sind funktionalisierte Alumoxane, wie sie z. B. in US 6,322,890 beschrieben sind und deren Inhalt hiermit durch Bezugnahme eingeschlossen wird.

Vorteilhaft beträgt der Anteil des Füllstoffs 1 bis 60 Gew.-%, vorzugsweise 5 bis 50 Gew.-%, insbesondere 10 bis 35 Gew.-%, bezogen auf das Gewicht des gesamten härtbaren Strukturklebstoffs.

Als weitere Bestandteile umfasst der härtbare Strukturklebstoff insbesondere auch Thixothropierungsmittel wie beispielsweise Aerosile oder Nanoclays, Zähigkeitsmodifikatoren, Reaktivverdünner sowie weitere dem Fachmann bekannte Bestandteile.

Meist bevorzugt handelt es sich beim härtbaren Strukturklebstoff um eine einkomponentige, hitzehärtende Epoxidharzzusammensetzung.

Das in der erfindungsgemässen Zusammensetzung vorhandene thermoplatische Elastomer, welches als durchdringendes Polymernetzwerk im Strukturklebstoff vorliegt, weist vorzugsweise eine Glasübergangstemperatur $T_g$ (Elastomer) auf, welche niedriger als die Glasübergangstemperatur $T_g$ bzw. als der Schmelzpunkt des härtbaren Strukturklebstoffs ist.

Insbesondere weist das thermoplastische Elastomer einen Schmelzpunkt auf, welcher über der Glasübergangstemperatur $T_g$ bzw. dem Schmelzpunkt des härtbaren Strukturklebstoffs liegt. Bevorzugt weist das thermoplastische Elastomer einen Schmelzpunkt von 50°C bis 200°C, insbesondere von 70°C bis 160°C, auf.

Das thermoplastische Elastomer weist vorzugsweise ein Molekulargewicht $M_n$ von ≥ 50'000 g/mol, insbesondere 70'000 bis 300'000 g/mol, auf. In diesem Molekulargewichtsbereich weist das thermoplastische Elastomer den Vorteil auf, dass es thermoplastisch verarbeitbar ist und gute mechanische Eigenschaften aufweist.

Meist bevorzugt ist das thermoplastische Elastomer ausgewählt aus der Gruppe bestehend aus Polyolefinen und Polyolefin-Copolymeren. Beispielsweise sind dies Polyethylen (PE), Polypropylen (PP), Ethylenvinylacetat (EVA) und dergleichen. Es ist beispielsweise auch denkbar, dass in der erfindungsgemässen Zusammensetzung eine Mischung von zwei oder mehr Elastomeren vorhanden ist.

Bei der Herstellung der erfindungsgemässen Zusammensetzung, wird der härtbare Strukturklebstoff bei einer Temperatur über seiner Glasübergangstemperatur $T_g$ bzw. seinem Schmelzpunkt mit dem thermoplastischen Elastomer vermischt bis eine homogene Mischung erhalten wird. Das Vermischen des härtbaren Strukturklebstoffs mit dem thermoplastischen Elastomer erfolgt meist bevorzugt bei einer Temperatur oberhalb des Schmelzpunktes der Elastomers, beispielsweise in einem Extruder.

Handelt es sich beim härtbaren Strukturklebstoff um einen hitzehärtenden Strukturklebstoff, kann der Strukturklebstoff vor der Zugabe des Härters mit dem Elastomer vermischt werden. Dadurch kann die Temperatur beim Vermischen bis oder sogar über die Aushärtungstemperatur des hitzehärtenden Strukturklebstoffs eingestellt werden, ohne dass es zu einer Aushärtung des Strukturklebstoffs kommt. Bei höheren Temperaturen wird in der Regel eine effizientere Vermischung erreicht.

In einem zweiten Aspekt betrifft die vorliegende Erfindung einen Formkörper, welcher einer reversiblen Formgebung unterzogen wurde, wobei die Formgebung die Schritte umfasst:

a) Erwärmen einer Zusammensetzung, wie sie vorhergehend beschrieben worden ist, auf eine Temperatur oberhalb der Glasübergangstemperatur $T_g$ des härtbaren Strukturklebstoffs, wenn dieser eine Epoxidharzzusammensetzung ist, oder auf eine Temperatur oberhalb des Schmelzpunkts des härtbaren Strukturklebstoffs, wenn dieser eine Polyurethanzusammensetzung ist;

b) Verformen der Zusammensetzung, unter Spannung des Elastomers;

c) Abkühlen der verformten Zusammensetzung unter die Glasübergangstemperatur $T_g$ des härtbaren Strukturklebstoffs, wenn dieser eine Epoxidharzzusammensetzung ist, oder unter den Schmelzpunkt des härtbaren Strukturklebstoffs, wenn dieser eine Polyurethanzusammensetzung ist.

Figur 1 zeigt schematisch die Herstellung eines erfindungsgemässen Formkörpers aus einer Zusammensetzung auf der Basis einer Epoxidharzzusammensetzung, wie sie vorhergehend beschrieben wurde.

Dabei liegt die feste Zusammensetzung 1 in ihrem Ausgangszustand Z1 in der ursprünglichen Form vor, in welcher sie beispielsweise bei ihrer Herstellung gebracht wurde. In einem ersten Schritt wird die Zusammensetzung dann um eine Temperatur $\Delta T_1$ auf eine Temperatur erwärmt, welche über der Glasübergangstemperatur $T_g$ der Epoxidharzzusammensetzung liegt, jedoch, im Fall einer hitzehärtenden Epoxidharzzusammensetzung, unterhalb ihrer Aushärtungstemperatur. Befindet sich die Zusammensetzung in diesem Zustand Z2, wird sie unter Einwirkung einer Kraft F in ihre temporäre, noch verformbare Form 2 gebracht. In dieser temporären, noch verformbaren Form, wie sie in Zustand Z3 dargestellt ist, liegt das Elastomer in gespannter Form vor. Die Zusammensetzung wird in dieser temporären Form gehalten und die Temperatur der Zusammensetzung wird wieder um die Temperatur $\Delta T_1$ auf eine Temperatur erniedrigt, welche unterhalb der Glasübergangstemperatur $T_g$ der Epoxidharzzusammensetzung liegt. Dabei verfestigt sich die Zusammensetzung und liegt nun fest in ihrer temporären Form 3 vor, so wie es in Zustand Z4 gezeigt ist. In diesem Zustand als Formkörper ist die Zusammensetzung lagerstabil und kann weiter verarbeitet werden. So kann der Formkörper gestanzt oder geschnitten werden und/oder insbesondere an einem Träger angebracht werden oder in einem zu verstärkenden Hohlraum eines strukturellen Bauteils angeordnet werden.

Das Verformen der erfindungsgemässen Zusammensetzung, bei welcher sie in ihre temporäre Form gebracht wird, erfolgt typischerweise durch Pressen, Walzen, Ziehen und dergleichen. Wichtig ist beim Verformen, dass die Zusammensetzung im verformten Zustand auf eine Temperatur unterhalb der Glasübergangstemperatur $T_g$ bzw. des Schmelzpunkts des härtbaren Strukturklebstoffs abgekühlt werden kann, damit sie in ihrer temporären Form verbleibt.

In einem weiteren Aspekt betrifft die vorliegende Erfindung ein Verstärkungselement zur Verstärkung in Hohlräumen von strukturellen Bauteilen umfassend einen Träger, an welchem ein Formkörper gemäss vorhergehender Beschreibung angebracht ist.

Dieser Träger kann aus beliebigen Materialien bestehen. Insbesondere besteht der Träger aus einem aus einem Kunststoff, aus einem Metall oder aus einer Kombination von Kunststoff und Metall.

Bevorzugte Kunststoffe sind Polyurethane, Polyamide, Polyester und Polyolefine und Polyolefin-Copolymere, insbesondere hochtemperaturbeständige Polymere wie Poly(phenylenether), Polysulfone oder Polyethersulfone. Meist bevorzugte Kunststoffe sind Polyamide (PA) wie PA6 oder PA66, Polyethlyen und Polypropylen sowie Polystyrol und Copolymere wie Acrylnitril-Butadien-Styrol (ABS). Bevorzugte Metalle sind Aluminium, Stahl, Nickel und Legierungen dieser Metalle. Das Metall kann weiterhin unbehandelt vorliegen oder es kann mit geeigneten Mitteln, beispielsweise zur Verhinderung von Korrosion oder zur Verbesserung der Haftung vorbehandelt sein.

Der Träger kann weiterhin einen beliebigen Aufbau und eine beliebige Struktur aufweisen. Es kann beispielsweise massiv, hohl oder geschäumt sein oder eine gitterartige Struktur aufweisen. Die Oberfläche des Trägers kann typischerweise glatt, rau oder strukturiert sein.

Der Träger kann, zusätzlich zur seiner Funktion als Träger für die erfindungsgemässe Zusammensetzung bzw. dem aus ihr hergestellten Formteil, zur strukturellen Verstärkung oder zur Abdichtung des Bauteils oder auch zur Geräuschdämmung beitragen.

Der Träger kann weiterhin mindestens ein Befestigungsmittel, insbesondere einen Clip, zur Befestigung und Platzierung des Verstärkungselements in einem Hohlraum aufweisen. Die Befestigung des Verstärkungselements mit einem Clip eignet sich insbesondere für Anwendungen, bei welchen die gesamte Oberfläche des Bauteils, also auch die Hohlrauminnenwand, beispielsweise für eine Tauchlackierung erreichbar sein muss. In solchen Fällen ist eine Befestigung beispielsweise durch Verkleben nicht geeignet, da der Lack die Stelle der Verklebung nicht erreichen kann.

Meist bevorzugt besteht der Träger aus einem Kunststoff, welcher mit einem Metall beschichtet ist. Als Kunststoff und als Metall sind dabei die vorhergehend beschriebenen Materialien bevorzugt.

Das Metall, mit welchem der Kunststoff beschichtet ist, kann dabei auf beliebige Art und Weise am Kunststoff befestigt sein. Beispielsweise erfolgt die Befestigung durch mechanische Befestigungsmittel wie Nägel, Schrauben, Nieten, mechanischen Clips, Klemmen, Bördeln und dergleichen, oder durch Verkleben des Metalls mit dem Kunststoff. Weiterhin kann das Metall auch mittels Kunststoffgalvanisierung auf den Kunststoff aufgetragen worden sein.

Meist bevorzugt beträgt die Schichtdicke der Metallschicht auf dem Kunststoffträger 0.03 bis 1.5 mm.

Der Träger aus Kunststoff, welcher mit einem Metall beschichtet ist, weist gegenüber einem reinen Metallträger den Vorteil auf, dass er einerseits leichter ist und dass er andererseits, durch die Eigenschaften des Kunststoffs wie die Wahl des Materials und dessen Verarbeitung, in seinen mechanischen Eigenschaften und in seiner Ausgestaltung sehr breit variiert werden kann. Der Vorteil der Metallbeschichtung gegenüber einem reinen Kunststoffträger ist, dass die Metalle in der Regel haftfreundlicher sind. Ein weiterer Vorteil der Metallbeschichtung ist, dass bei hitzehärtenden Strukturklebstoffen die Metallschicht sehr lokal und effizient durch Induktion erwärmt werden kann.

Figur 2 zeigt einen Träger 5 aus einem Kunststoff, welcher mit einem Metall 8 beschichtet ist. Das Metall ist dabei mit Nägeln 9 am Träger befestigt.
Auf der Metallschicht befindet sich ein Formkörper 3, bestehend aus einer erfindungsgemässen Zusammensetzung in ihrem temporären Zustand.

Figur 3 zeigt schematisch ein Verstärkungselement, bestehend aus einem Träger 5, an welchem ein Formkörper 3 aus einer erfindungsgemässen Zusammensetzung mit hitzehärtender Epoxidharzzusammensetzung als Strukturklebstoff und Elastomer in ihrer temporären Form, angebracht ist, in seinem Ausgangszustand Z4. In einem ersten Schritt wird der Formkörper 3 dann um eine Temperatur $\Delta T_1$ auf eine Temperatur erwärmt, welche über der Glasübergangstemperatur $T_g$ der Epoxidharzzusammensetzung liegt, wobei sich das Elastomer entspannt und zu einer Verformung des

Formkörpers bzw. der Zusammensetzung 1 in ihre ursprüngliche Form führt. Dies entspricht Zustand Z5 in Figur 3. Danach wird die Temperatur weiter um $\Delta T_2$ auf eine Temperatur erhöht, bei welcher die Epoxidharzzusammensetzung aushärtet. Die ausgehärtete Zusammensetzung 4 ist in Zustand Z6 gezeigt.

Die Temperaturerhöhung, welche zur Verformung des Formkörpers führt, und die Temperaturerhöhung zur Aushärtung des Strukturklebstoffs, müssen nicht zwingend zweistufig verlaufen. Es ist durchaus möglich, die beiden Schritte durch einen stetigen Temperaturanstieg nacheinander ablaufen zu lassen.

Weiterhin umfasst die Erfindung die Verwendung eines Verstärkungselements, wie es vorhergehend beschrieben wurde, zur Verstärkung in Hohlräumen von strukturellen Bauteilen. Vorzugsweise werden derartige strukturelle Bauteile in Karosserien und/oder Rahmen von Transport- und Fortbewegungsmitteln, insbesondere von Fahrzeugen zu Wasser oder zu Land oder von Luftfahrzeugen, eingesetzt. Bevorzugt umfasst die Erfindung die Verwendung eines erfindungsgemässen Verstärkungselements in Karosserien oder Rahmen von Automobilen, Lastkraftwagen, Eisenbahnwagen, Booten, Schiffen, Hubschraubern und Flugzeugen, meist bevorzugt in Automobilen.

Ein weiterer Aspekt der vorliegenden Erfindung betrifft ein Verfahren zur Verstärkung in Hohlräumen von strukturellen Bauteilen umfassend die Schritte:

a') Platzieren eines Verstärkungselements gemäss vorhergehender Beschreibung in den Hohlraum eines strukturellen Bauteils;

b') Erwärmen des Formkörpers 3 auf dem Verstärkungselement auf eine Temperatur oberhalb der Glasübergangstemperatur $T_g$ des härtbaren Strukturklebstoffs, wenn dieser eine Epoxidharzzusammensetzung ist, oder auf eine Temperatur oberhalb des Schmelzpunkts des härtbaren Strukturklebstoffs, wenn dieser eine Polyurethanzusammensetzung ist, wodurch der Formkörper in seine Form vor der Formgebung, also in die ursprüngliche Form, zurückgeht;

c') Aushärten des härtbaren Strukturklebstoffs.

In einer Ausführungsform des beschriebenen Verfahrens zur Verstärkung in Hohlräumen von strukturellen Bauteilen, bei welchem die Massgabe gilt, dass der Träger des Verstärkungselements aus einem durch Induktion erwärmbaren Metall oder aus einem Material besteht, welcher mit einem durch Induktion erwärmbaren Metall beschichtet ist, und mit der Massgabe, dass der härtbare Strukturklebstoff eine hitzehärtender Strukturklebstoff ist, werden die Schritte b') und c') durch Induktion, das heisst durch ein elektromagnetisches Wechselfeld einer Induktionsspule, bewirkt.

Figur 4 zeigt analog zu Figur 3 schematisch die Verstärkung in einem Hohlraum eines strukturellen Bauteils 6, wobei im Inneren des strukturellen Bauteils ein Verstärkungselement, bestehend aus einem Träger 5 und mehreren Formkörpern 3 aus einer erfindungsgemässen Zusammensetzung mit hitzehärtender Epoxidharzzusammensetzung als Strukturklebstoff und Elastomer in ihrer temporären Form, angebracht ist. Der Träger des Verstärkungselements ist dabei mit einem Clip 7 am strukturellen Bauteil befestigt. Der Formkörper bzw. die Zusammensetzung liegt dabei in seiner temporären Form vor (Zustand Z4) und wird anschliessend um eine Temperatur $\Delta T_1$ auf eine Temperatur erwärmt, welche über der Glasübergangstemperatur $T_g$ des härtbaren Strukturklebstoffs liegt. Dabei entspannt sich das Elastomer und führt zu einer Verformung des Formkörpers bzw. der Zusammensetzung 1 in ihre ursprüngliche Form, wodurch der offen gelassene Spalt 10 zwischen Verstärkungselement und Hohlraum geschlossen wird und sich die erfindungsgemässe Zusammensetzung an die Hohlrauminnenwand haftet (Zustand Z5). Nach einer weiteren Temperaturerhöhung um eine Temperatur $\Delta T_2$ härtet der hitzehärtende Strukturklebstoff aus. Figur 4, Zustand Z6, zeigt das verstärkte strukturelle Bauteil mit der ausgehärteten Zusammensetzung 4.

Figur 5 zeigt ein Verstärkungselement, wie es in einem Hohlraum 10 eines strukturellen Bauteils 6 eingesetzt wird vor der Verformung des Formkörpers bzw. der erfindungsgemässen Zusammensetzung in ihrer temporären Form 3, welche sich auf einem Träger 5 befindet.

Figur 6 zeigt das Verstärkungselement aus Figur 5 wie es in einem Hohlraum eines strukturellen Bauteils 6 eingesetzt ist, wobei das Formteil bzw. die erfindungsgemässe Zusammensetzung in diesem Fall bereits in seine ursprüngliche Form zurückgegangen ist und an die Innenwände des strukturellen Bauteils 6 haftet. Weiterhin zeigt Figur 6 die ausgehärtete Zusammensetzung 4.

Die Form und Struktur erfindungsgemässer Verstärkungselemente kann gemäss ihrem Einsatzort beliebig gewählt werden.

Weiterhin betrifft die vorliegende Erfindung eine gehärtete Zusammensetzung, wie sie durch einen Härtungsvorgang, insbesondere durch Hitzehärtung, aus einer vorhergehend beschriebenen Zusammensetzung erhältlich ist.

## Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Testverfahren

Der **Elastizitätsmodul** (E-Modul) und die **Fliessspannung** wurden, in Anlehnung an DIN EN ISO 604, bei einer konstanten Deformationsgeschwindigkeit von 10 mm/min an ausgehärteten Probekörpern der Abmessung 10x10x6 mm (LxBxH) bestimmt. Der E-Modul wurde als Sekantenmodul für die Dehnungsdifferenz von 0.5 und 1 % bestimmt. Die Fliessspannung entspricht dem Schnittpunkt zweier Sekanten der Dehnungsdifferenzen von 0.5 und 1 % bzw. 10 und 15 %.

Die **Formstabilität** des Materials in der temporären Form wurde während 7 Tagen bei Normklima (23°C / 50% Luftfeuchtigkeit) ("Relaxation"), das **Rückstellvermögen** zur ursprünglichen Form nach 7 Tagen Lagerung bei Normklima bestimmt. Die Dimensionen der ursprünglichen Form der Probekörper misst 10x10x6 mm (LxBxH). Die Höhe in ursprünglicher Form ($H_0$) betrug also 6 mm. Durch Pressen bei erhöhter Temperatur und anschliessendem Abkühlen wurden die Probekörper in die temporäre Form mit einer Höhe von 3 mm gebracht ($H_{Temp}$), was einer Kompression von 50 % entspricht und somit beim Rückstellvorgang einen Höhengewinn von 100 % erlaubt.

Die Relaxation ist hier definiert als:

$$Relaxation\ [\%] = \frac{H_{Temp}(Tag\ 7) - H_{Temp}(Tag\ 0)}{H_{Temp}(Tag\ 0)} \cdot 100$$

Das Rückstellvermögen ist bestimmt als:

$$Rückstellvermögen\ [\%] = \frac{H_0(Tag\ 7,\ nach\ Aushärtung)}{H_0(Tag\ 0)} \cdot 100$$

Herstellung der Probekörper

Für die folgenden Beispiele wurde ein Strukturklebstoff auf Basis von Epoxidharzzusammensetzungen verwendet. Die in den Beispielen ***1*** bis ***6*** verwendeten thermoplastischen Elastomere sind ein Ethylen-Vinylacetat-Copolymer (Elvax® 470, erhältlich von DuPont Company, USA), ein Ethylen-Octen Copolymer (Engage® 8450, erhältlich von Dow Chemical Company, USA) und ein thermoplastisches Polyurethan (Pearlbond® D12C75, erhältlich von Merquinsa S.L., Spanien).

Tabelle 1 Formulierungen ***1*** bis ***6*** und Referenzschaum ***Ref*** in Gew.-% sowie Resultate

| | ***Ref*** | ***1*** | ***2*** | ***3*** | ***4*** | ***5*** | ***6*** |
|---|---|---|---|---|---|---|---|
| Araldite® GT 7004 a) | 85.4 | 88.3 | 79.5 | 57.9 | 79.5 | 57.9 | 57.9 |
| Araldite® GY 250 a) | | | | | | | |
| Dicyandiamid b) | 1.6 | 1.7 | 1.5 | 1.1 | 1.5 | 1.1 | 1.1 |
| Jeffamine® D230 a) | | | | | | | |
| Armeen® CD c) | | | | | | | |
| Elvax® 470 | | | 9 | 31 | | | |
| Engage® 8450 | | | | | 9 | 31 | |
| Pearlbond® D12C75 | | | | | | | 31 |
| Luvopor® OB d) | 3 | | | | | | |
| Aerosil® e) | 10 | 10 | 10 | 10 | 10 | 10 | 10 |
| Relaxation [%] | - | 0 | 0 | 0 | 0 | 0 | 0 |
| Rückstellvermögen [%] | - | 0 | 50 | 90 | 65 | 90 | 55 |
| E-Modul [MPa] | 230 | 1700 | 1500 | 480 | 1400 | 740 | 2200 |

(fortgesetzt)

| | *Ref* | *1* | *2* | *3* | *4* | *5* | *6* |
|---|---|---|---|---|---|---|---|
| Fliessspannung [MPa] | 11 | 60 | 47 | 20 | 48 | 30 | 65 |

[a] erhältlich von Huntsman International LLC, USA;
[b] erhältlich von AlzChem GmbH, Deutschland;
[c] erhältlich von Akzo Nobel Surface Chemistry AB, Schweden;
[d] erhältlich von Lehmann&Voss&Co, Deutschland;
[e] erhältlich von Wacker Chemie AG, Deutschland.

Die Formulierungen ***1*** bis ***6*** sowie der Referenzschaum ***Ref*** wurden hergestellt durch Vermischen der Bestandteile gemäss Tabelle 1 in den entsprechenden Gewichtsprozenten auf einem Doppelschneckenextruder bei Temperaturen oberhalb der Schmelztemperatur des jeweils verwendeten thermoplastischen Elastomeren bzw. unterhalb der Zersetzungstemperatur des chemischen Treibmittels *(**Ref**)*.

Der Strukturklebstofif wurde bei allen Probekörpern während 60 min bei 180°C ausgehärtet.

**Bezugszeichenliste**

1 Zusammensetzung in der ursprünglichen Form

2 Zusammensetzung (verformbar)

3 Formkörper (temporäre Form)

4 Ausgehärtete Zusammensetzung

5 Träger

6 strukturelles Bauteil

7 Clip

8 Metallschicht

9 Nagel

10 Spalt

F Kraft

Z1 Zustand der Zusammensetzung in ursprünglicher Form

Z2 Zustand der verformbaren Zusammensetzung

Z3 Zustand der Zusammensetzung im temporären Zustand (Formkörper)

Z4 Zustand der ausgehärteten Zusammensetzung

$\Delta T_1$ Temperaturunterschied zwischen Temperatur unterhalb der $T_g$ der Epoxidharzzusammensetzung und Temperatur oberhalb des Tg der Epoxidharzzusammensetzung

$\Delta T_2$ Temperaturunterschied zwischen Temperatur oberhalb der $T_g$ der Epoxidharzzusammensetzung und der Aushärtungstemperatur der Epoxidharzzusammensetzung

## Patentansprüche

**1.** Zusammensetzung umfassend

i) mindestens einen härtbaren Strukturklebstoff, sowie
ii) mindestens ein thermoplastisches Elastomer;
**dadurch gekennzeichnet, dass** das thermoplastische Elastomer als durchdringendes Polymernetzwerk im Strukturklebstoff vorliegt.

**2.** Zusammensetzung gemäss Anspruch 1, **dadurch gekennzeichnet, dass** der härtbare Strukturklebstoff ein hitzehärtender Strukturklebstoff ist.

**3.** Zusammensetzung gemäss Anspruch 2, **dadurch gekennzeichnet, dass** der hitzehärtende Strukturklebstoff eine Aushärtungstemperatur von 120°C bis 220°C aufweist.

**4.** Zusammensetzung gemäss einem der vorhergehenden Ansprüche, **dadurch gekennzeichnet, dass** der härtbare Strukturklebstoff ausgewählt ist aus der Gruppe bestehend aus einer Epoxidharzzusammensetzung und Polyurethanzusammensetzung.

**5.** Zusammensetzung gemäss Anspruch 4, **dadurch gekennzeichnet, dass** der härtbare Strukturklebstoff
eine Glasübergangstemperatur $T_g$ im Bereich von 23°C bis 95°C aufweist, wenn der härtbare Strukturklebstoff eine Epoxidharzzusammensetzung ist; oder
einen Schmelzpunkt im Bereich von 23°C bis 95°C aufweist, wenn der härtbare Strukturklebstoff eine Polyurethanzusammensetzung ist.

**6.** Zusammensetzung gemäss Anspruch 4, **dadurch gekennzeichnet, dass** der härtbare Strukturklebstoff eine Epoxidharzzusammensetzung ist umfassend mindestens ein Epoxidharz **A** und mindestens einen Härter **B** für Epoxidharze, welcher durch erhöhte Temperatur aktiviert wird.

**7.** Zusammensetzung gemäss einem der vorhergehenden Ansprüche, **dadurch gekennzeichnet, dass** das Elastomer ein Molekulargewicht $M_n$ von ≥ 50'000 g/mol aufweist.

**8.** Zusammensetzung gemäss Anspruch 4, **dadurch gekennzeichnet, dass** das thermoplastische Elastomer einen Schmelzpunkt aufweist der

- über der Glasübergangstemperatur $T_g$ des härtbaren Strukturklebstoffs liegt, wenn dieser eine Epoxidharzzusammensetzung ist; bzw.
- über dem Schmelzpunkt des härtbaren Strukturklebstoffs liegt, wenn dieser eine Polyurethanzusammensetzung ist.

**9.** Zusammensetzung gemäss Anspruch 8, **dadurch gekennzeichnet, dass** das thermoplastische Elastomer ausgewählt ist aus der Gruppe bestehend aus Polyolefinen und Polyolefin-Copolymeren.

**10.** Formkörper (3), **dadurch gekennzeichnet, dass** er einer reversiblen Formgebung unterzogen wurde, wobei die Formgebung die Schritte umfasst:

a) Erwärmen einer Zusammensetzung gemäss einem der Ansprüche 4 bis 9
auf eine Temperatur oberhalb der Glasübergangstemperatur $T_g$ des härtbaren Strukturklebstoffs, wenn dieser eine Epoxidharzzusammensetzung ist, oder
auf eine Temperatur oberhalb des Schmelzpunkts des härtbaren Strukturklebstoffs, wenn dieser eine Polyurethanzusammensetzung ist;
b) Verformen der Zusammensetzung, unter Spannung des Elastomers;
c) Abkühlen der verformten Zusammensetzung unter die Glasübergangstemperatur $T_g$ des härtbaren Strukturklebstoffs, wenn dieser eine Epoxidharzzusammensetzung ist, oder unter den Schmelzpunkt des härtbaren Strukturklebstoffs, wenn dieser eine Polyurethanzusammensetzung ist.

**11.** Verstärkungselement zur Verstärkung in Hohlräumen von strukturellen Bauteilen umfassend einen Träger (5), an welchem ein Formkörper (3) gemäss Anspruch 10 angebracht ist.

**12.** Verstärkungselement gemäss Anspruch 11, **dadurch gekennzeichnet, dass** der Träger (5) aus einem Kunststoff, aus einem Metall oder aus einer Kombination von Kunststoff und Metall besteht.

**13.** Verstärkungselement gemäss Anspruch 12, **dadurch gekennzeichnet, dass** der Träger (5) aus einem Kunststoff besteht, welcher mit einem Metall beschichtet ist.

**14.** Verfahren zur Verstärkung in Hohlräumen von strukturellen Bauteilen umfassend die Schritte:

a') Platzieren eines Verstärkungselements gemäss einem der Ansprüche 11 bis 13 in den Hohlraum eines strukturellen Bauteils;
b') Erwärmen des Formkörpers (3) auf dem Verstärkungselement auf eine Temperatur oberhalb der Glasübergangstemperatur $T_g$ des härtbaren Strukturklebstoffs, wenn dieser eine Epoxidharzzusammensetzung ist, oder auf eine Temperatur oberhalb des Schmelzpunkts des härtbaren Strukturklebstoffs, wenn dieser eine Polyurethanzusammensetzung ist;
c') Aushärten des härtbaren Strukturklebstoffs.

**15.** Verfahren gemäss Anspruch 14,
mit der Massgabe, dass der Träger (5) des Verstärkungselements aus einem induktiv heizbaren Metall oder aus einem Material besteht, welcher mit einem induktiv heizbaren Metall beschichtet ist; und
mit der Massgabe, dass der härtbare Strukturklebstoff eine hitzehärtender Strukturklebstoff ist;
**dadurch gekennzeichnet, dass** die Schritte b') und c') durch Induktion bewirkt werden.

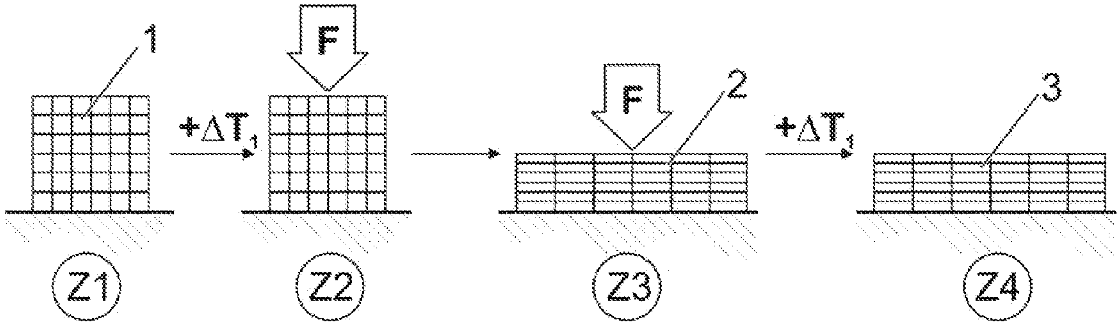


Figur 1

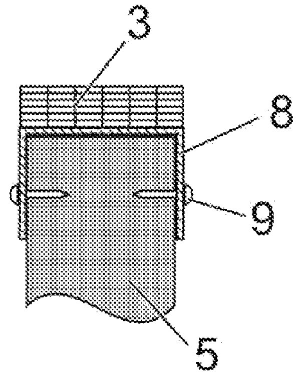


Figur 2

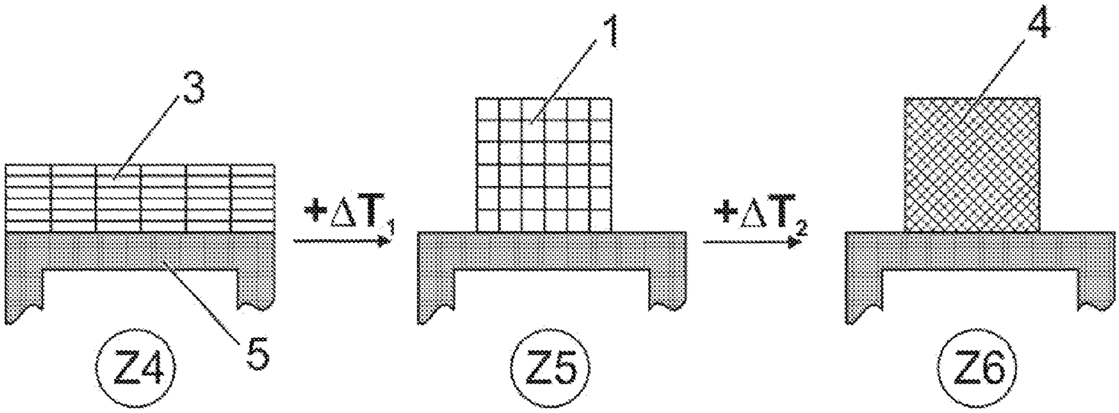


Figur 3

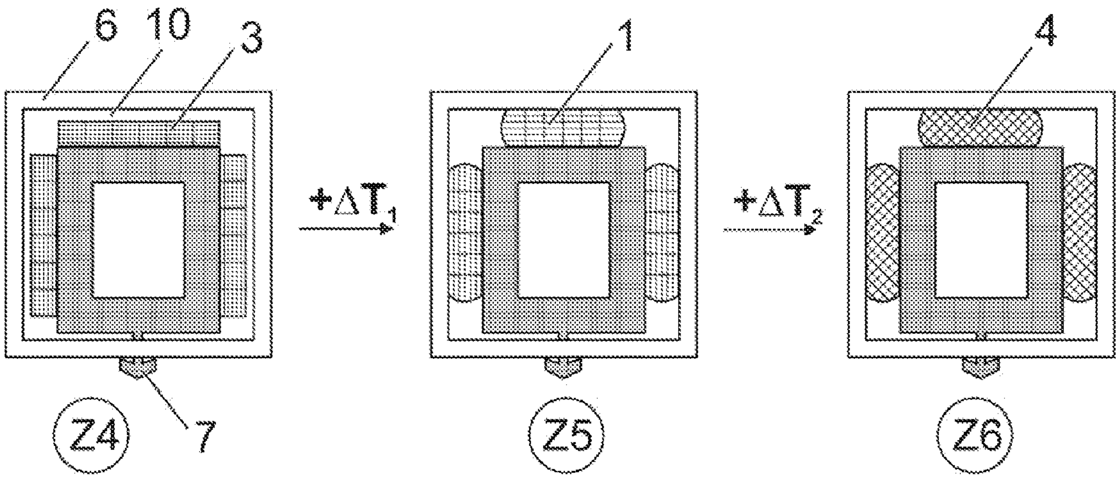


Figur 4

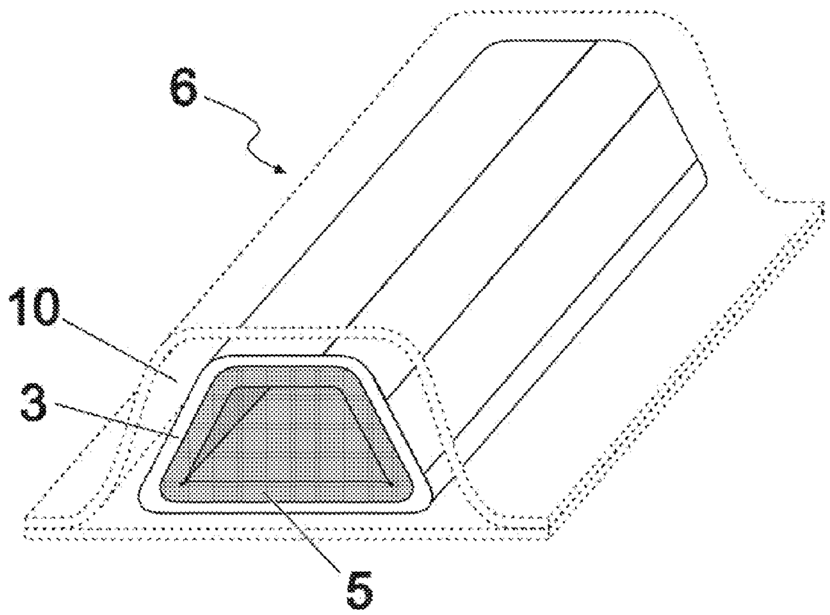


Figur 5

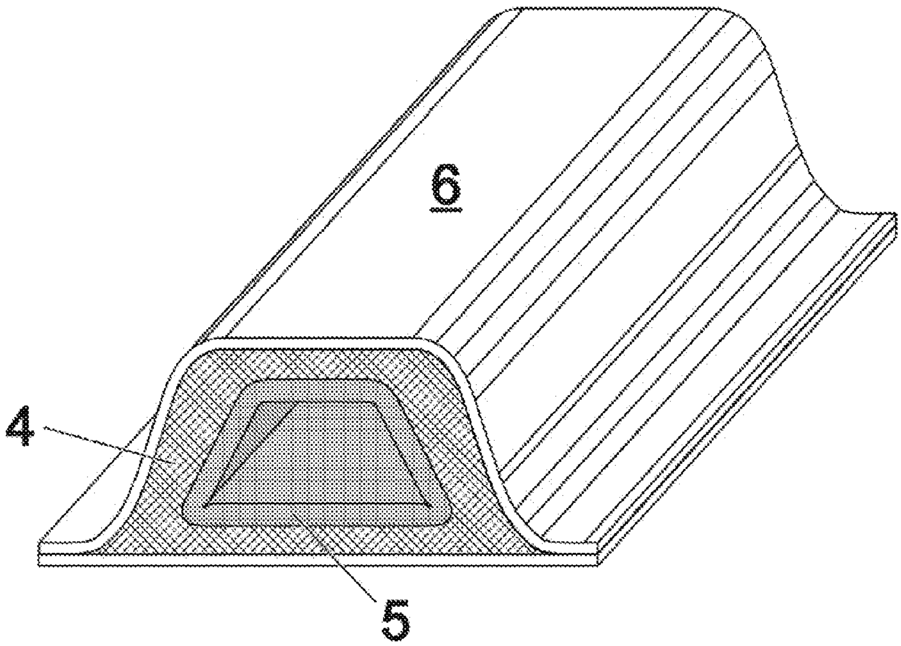


Figur 6

Europäisches Patentamt
European Patent Office
Office européen des brevets

# EUROPÄISCHER RECHERCHENBERICHT

Nummer der Anmeldung
EP 10 15 8076

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 2 182 025 A1 (SIKA TECHNOLOGY AG [CH]) 5. Mai 2010 (2010-05-05)<br>* Beispiele 1,2,8; Tabellen 2,3 * | 1-4,6,7,9 | INV.<br>C09J163/00<br>C09J175/00 |
| X | EP 1 155 084 A1 (SIKA CORP [US]) 21. November 2001 (2001-11-21)<br>* Beispiele 1,2 * | 1,2,4,6,7,9 | |
| A | WO 2009/016106 A1 (SIKA TECHNOLOGY AG [CH]; FINTER JUERGEN [CH]; BLANK NORMAN [CH]; BURCH) 5. Februar 2009 (2009-02-05)<br>* das ganze Dokument * | 1-15 | |
| X | WO 00/02968 A1 (3M INNOVATIVE PROPERTIES CO [US]) 20. Januar 2000 (2000-01-20)<br>* Beispiel 2 * | 1-7,9 | |
| X | R. E. TOUHSAENT, D. A. THOMAS, AND L. H. SPERLING: "EPOXY/ACRYLIC SIMULTANEOUSINTERPENETRATING NETWORKS"<br>J. POLYMER SCI.: SYMPOSIUM, Nr. 46, 1974, Seiten 175-190, XP002597611<br>* Seite 177 - Seite 178 * | 1-6 | RECHERCHIERTE SACHGEBIETE (IPC)<br>C09J |

Der vorliegende Recherchenbericht wurde für alle Patentansprüche erstellt

| Recherchenort | Abschlußdatum der Recherche | Prüfer |
|---|---|---|
| München | 24. August 2010 | Marquis, Damien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

4

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 15 8076

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2010

| Im Recherchenbericht angeführtes Patentdokument | Datum der Veröffentlichung | Mitglied(er) der Patentfamilie | Datum der Veröffentlichung |
|---|---|---|---|
| EP 2182025 A1 | 05-05-2010 | CN 101724225 A | 09-06-2010 |
| | | KR 20100048943 A | 11-05-2010 |
| | | US 2010108258 A1 | 06-05-2010 |
| EP 1155084 A1 | 21-11-2001 | AT 269881 T | 15-07-2004 |
| | | AU 1319900 A | 29-05-2000 |
| | | CA 2349891 A1 | 18-05-2000 |
| | | DE 69918335 D1 | 29-07-2004 |
| | | DE 69918335 T2 | 25-08-2005 |
| | | ES 2229789 T3 | 16-04-2005 |
| | | JP 2002529566 T | 10-09-2002 |
| | | WO 0027920 A1 | 18-05-2000 |
| | | US 6387470 B1 | 14-05-2002 |
| | | US 6368438 B1 | 09-04-2002 |
| WO 2009016106 A1 | 05-02-2009 | EP 2019027 A1 | 28-01-2009 |
| | | EP 2183150 A1 | 12-05-2010 |
| WO 0002968 A1 | 20-01-2000 | AU 4732199 A | 01-02-2000 |
| | | CN 1308662 A | 15-08-2001 |
| | | DE 69934230 T2 | 11-10-2007 |
| | | EP 1098945 A1 | 16-05-2001 |
| | | JP 2002520441 T | 09-07-2002 |
| | | US 7005394 B1 | 28-02-2006 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 08168009 A
- WO 2008059056 A1
- WO 2009016106 A1
- EP 0204970 A
- EP 0922720 A
- US 6322890 B

### In der Beschreibung aufgeführte Nicht-Patentliteratur

- IUPAC Compendium of Chemical Terminology. 1997